# EUROPÄISCHE PATENTANMELDUNG

(11) **EP 1 609 843 A2**
(43) Veröffentlichungstag der Anmeldung: **28.12.2005**
(21) Anmeldenummer: 05009924.1
(22) Anmeldetag: 06.05.2005
(51) Int. Cl.: C10L 1/22, C10L 1/14

(54) **Demulgatoren für Mischungen aus Mitteldestillaten mit Brennstoffölen pflanzlichen oder tierischen Ursprungs und Wasser**

(30) Priorität: 18.05.2004 DE 102004024532
(71) Anmelder: Clariant GmbH, 65929 Frankfurt am Main (DE)
(72) Erfinder: Siggelkow, Bettina, Dr., 46145 Oberhausen (DE); Leinweber, Dirk, Dr., 65824 Schwalbach (DE); Reimann, Werner, Dr., 65929 Frankfurt (DE); Neuhaus, UIrike, 46147 Oberhausen (DE); Braun, Renate, 46539 Dinslaken (DE)
(74) Vertreter: Mikulecky, Klaus

(57) **Zusammenfassung**

Gegenstand der Erfindung sind Brennstofföle, enthaltend einen größeren Anteil einer Mischung aus
A) einem Mitteldestillat-Brennstofföl, und
B) einem Biobrennstofföl,
   sowie einem kleineren Anteil
C) öllöslicher Oligo- oder Polyethylenimine, die mit 1 bis 100 C₂-C₄-Alkylenoxidgruppen oder einer Mischung solcher Alkylenoxidgruppen pro freier NH-Gruppe alkoxyliert sind.

## Beschreibung

Demulgatoren für Mischungen aus Mitteldestillaten mit Brennstoffölen pflanzlichen oder tierischen Ursprungs und Wasser

Die vorliegende Erfindung betrifft die Verwendung alkoxylierter Polyethylenimine als Demulgatoren für Mischungen aus Mitteldestillaten mit pflanzlichen oder tierischen Brennstoffölen und Wasser.

Im Zuge abnehmender Welterdölreserven und der Diskussion um die Umwelt beeinträchtigenden Konsequenzen des Verbrauchs fossiler und mineralischer Brennstoffe steigt das Interesse an alternativen, auf nachwachsenden Rohstoffen basierenden Energiequellen. Dazu gehören insbesondere native Öle und Fette pflanzlichen oder tierischen Ursprungs. Dies sind in der Regel Triglyceride von Fettsäuren mit 10 bis 24 C-Atomen, die einen den herkömmlichen Brennstoffen vergleichbaren Heizwert haben, aber gleichzeitig als biologisch abbaubar und umweltverträglich eingestuft werden.

Aus tierischem oder pflanzlichem Material erhaltene Öle sind hauptsächlich Stoffwechselprodukte, die Triglyceride von Monocarbonsäuren umfassen, z.B. Säuren mit 10 bis 25 Kohlenstoffatomen, und der Formel 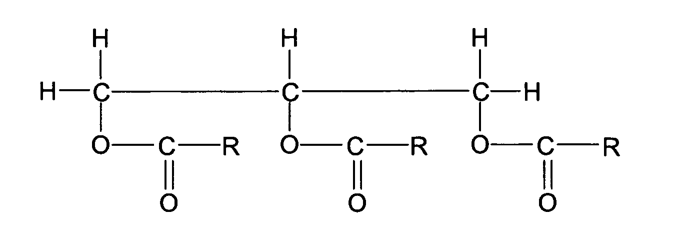 entsprechen, in der R ein aliphatischer Rest mit 10 bis 25 Kohlenstoffatomen ist, der gesättigt oder ungesättigt sein kann.

Im Allgemeinen enthalten solche Öle Glyceride von einer Reihe von Säuren, deren Anzahl und Sorte mit der Quelle des Öls variiert, und sie können zusätzlich Phosphoglyceride enthalten. Solche Öle können nach im Stand der Technik bekannten Verfahren erhalten werden.

Auf Grund der teilweise unbefriedigenden physikalischen Eigenschaften der Triglyceride ist die Technik dazu übergegangen, die natürlich vorkommenden Triglyceride in Fettsäureester niederer Alkohole wie Methanol oder Ethanol zu überführen. Zum Stand der Technik gehören auch Mischungen aus Mitteldestillaten mit Ölen pflanzlicher oder tierischer Herkunft (im Folgenden auch "Biobrennstofföle" genannt).

EP-B-0 665 873 offenbart eine Brennstoffölzusammensetzung, die einen Biobrennstoff, ein Brennstofföl auf Erdölbasis und ein Additiv umfasst, welches (a) ein öllösliches Ethylencopolymer oder (b) ein Kammpolymer oder (c) eine polare Stickstoffverbindung oder (d) eine Verbindung, in der mindestens eine im wesentlichen lineare Alkylgruppe mit 10 bis 30 Kohlenstoffatomen mit einem nicht polymeren organischen Rest verbunden ist, um mindestens eine lineare Kette von Atomen zu liefern, die die Kohlenstoffatome der Alkylgruppen und ein oder mehrere nicht endständige Sauerstoffatome einschließt, oder (e) eine oder mehrere der Komponenten (a), (b), (c) und (d) umfasst.

Ein Hindernis für die Verwendung von Mischungen aus Mitteldestillaten und Biobrennstoffölen ist deren starke Neigung, mit Wasser stabile Emulsionen einzugehen. Solche Emulsionen bewirken in der Verteilungskette der Brennstofföle sowie bei deren Verwendung in Kraftfahrzeugen Korrosionsprobleme.

Aufgabe dieser Erfindung war es somit, einen geeigneten Demulgator für Mischungen aus Mitteldestillaten, Biobrennstoffölen und Wasser zu finden.

Polyethylenimine sind bekannte Demulgatoren für Rohöl. So offenbaren beispielsweise DE-A-22 27 546, DE-A-24 35 713 und DE-A-33 00 866 diese Eigenschaften der Polyethylenimine.

Überraschenderweise wurde nun gefunden, dass bestimmte Oligo- und Polyethylenimine die mit C₂-C₄-Alkylenoxidgruppen oder einer Mischung solcher Alkylenoxidgruppen alkoxyliert sind, ausgezeichnete Demulgatoren für solche Mischungen sind.

Gegenstand der Erfindung ist ein Brennstofföl, enthaltend einen größeren Anteil einer Mischung aus
A) einem Mitteldestillat-Brennstofföl, und
B) einem Biobrennstofföl,
   sowie einem kleineren Anteil
C) öllöslicher Oligo- oder Polyethylenimine, die mit 1 bis 100 C₂-C₄-Alkylenoxidgruppen oder einer Mischung solcher Alkylenoxidgruppen pro freier NH-Gruppe alkoxyliert sind.

Ein weiterer Gegenstand der Erfindung ist die Verwendung des unter C) definierten Oligo- oder Polyethylenimins als Demulgator in Mischungen aus Mitteldestillat-Brennstoffölen mit Biobrennstoffölen und Wasser.

Ein weiterer Gegenstand der Erfindung ist ein Verfahren zur Demulgierung von Wasser aus Mischungen von Mitteldestillat-Brennstoffölen mit Biobrennstoffölen, indem man den Mischungen das oben definierte Oligo- oder Polyethylenimin zusetzt.

Als Bestandteil A) werden Mitteldestillat-Brennstofföle verwendet. Damit bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Vorzugsweise werden solche Mitteldestillate verwendet, die weniger als 350 ppm Schwefel, besonders bevorzugt weniger als 200 ppm Schwefel insbesondere weniger als 50 ppm Schwefel und in speziellen Fällen weniger als 10 ppm Schwefel enthalten. Es handelt sich dabei im Allgemeinen um solche Mitteldestillate, die einer hydrierenden Raffination unterworfen wurden, und die daher nur geringe Anteile an polyaromatischen und polaren Verbindungen enthalten. Vorzugsweise handelt es sich um solche Mitteldestillate, die 95 %-Destillationspunkte unter 370°C, insbesondere 350°C und in Spezialfällen unter 330°C aufweisen. Vorzugsweise haben die Mitteldestillate Aromatengehalte von unter 28 Gew.-%, insbesondere unter 20 Gew.-%.
Als Bestandteil B) werden Biobrennstofföle verwendet. In einer bevorzugten Ausführungsform handelt es sich bei dem Biobrennstofföl, das häufig auch als "Biodiesel" oder "Biokraftstoff" bezeichnet wird, um Fettsäurealkylester aus Fettsäuren mit 14 bis 24 C-Atomen und Alkoholen mit 1 bis 4 C-Atomen. Gewöhnlich enthält ein größerer Teil der Fettsäuren ein, zwei oder drei Doppelbindungen. Besonders bevorzugt handelt es sich z.B. um Rapsölsäuremethylester und speziell um Mischungen, die Raps-, Sonnenblumen- und/oder Sojaölfettsäuremethylester enthalten.

Beispiele für Öle, die sich von tierischem oder pflanzlichem Material ableiten, und die in der erfindungsgemäßen Zusammensetzung verwendet werden können, sind Rapsöl, Korianderöl, Sojaöl, Baumwollsamenöl, Sonnenblumenöl, Ricinusöl, Olivenöl, Erdnussöl, Maisöl, Mandelöl, Palmkernöl, Kokosnussöl, Senfsamenöl, Rindertalg, Knochenöl und Fischöle. Weitere Beispiele schließen Öle ein, die sich von Weizen, Jute, Sesam, Scheabaumnuß, Arachisöl und Leinöl ableiten und können aus diesen nach im Stand der Technik bekannten Verfahren abgeleitet werden. Außerdem können Öle verwendet werden, welche aus gebrauchten Altölen, wie Frittieröl gewonnen wurden. Rapsöl, das eine Mischung von mit Glycerin partiell veresterten Fettsäuren ist, ist bevorzugt, da es in großen Mengen erhältlich ist und in einfacher Weise durch Auspressen von Rapssamen erhältlich ist. Des weiteren sind die ebenfalls weit verbreiteten Öle von Sonnenblumen und Soja sowie deren Mischungen mit Rapsöl bevorzugt.

Als niedrigere Alkylester von Fettsäuren kommen die folgenden in Betracht, beispielsweise als handelsübliche Mischungen: Die Ethyl-, Propyl-, Butyl- und insbesondere Methylester von Fettsäuren mit 12 bis 22 Kohlenstoffatomen, beispielsweise von Laurinsäure, Myristinsäure, Palmitinsäure, Palmitolsäure, Stearinsäure, Ölsäure, Elaidinsäure, Petroselinsäure, Ricinolsäure, Elaeostearinsäure, Linolsäure, Linolensäure, Eicosansäure, Gadoleinsäure, Docosansäure oder Erucasäure, die bevorzugt eine lodzahl von 50 bis 150, insbesondere 90 bis 125 haben. Mischungen mit besonders vorteilhaften Eigenschaften sind solche, die hauptsächlich, d.h. zu mindestens 50 Gew.-%, Methylester von Fettsäuren mit 16 bis 22 Kohlenstoffatomen und 1, 2 oder 3 Doppelbindungen enthalten. Die bevorzugten niedrigeren Alkylester von Fettsäuren sind die Methylester von Ölsäure, Linolsäure, Linolensäure und Erucasäure.

Handelsübliche Mischungen der genannten Art werden beispielsweise durch Spaltung und Veresterung von tierischen und pflanzlichen Fetten und Ölen durch ihre Umesterung mit niedrigeren aliphatischen Alkoholen erhalten. Zur Herstellung von niedrigeren Alkylestern von Fettsäuren ist es vorteilhaft, von Fetten und Ölen mit hoher lodzahl auszugehen, wie beispielsweise Sonnenblumenöl, Rapsöl, Korianderöl, Castoröl (Ricinusöl), Sojaöl, Baumwollsamenöl, Erdnussöl oder Rindertalg. Niedrigere Alkylester von Fettsäuren auf Basis einer neuen Rapsölsorte, deren Fettsäurekomponente zu mehr als 80 Gew.-% von ungesättigten Fettsäuren mit 18 Kohlenstoffatomen abgeleitet ist, sind bevorzugt.

Das Mischungsverhältnis der Bestandteile A und B kann beliebig variieren. Es liegt vorzugsweise zwischen A:B = 99,9:0,1 und 0,1:99,9, insbesondere 99:1 bis 1:99, speziell 95:5 bis 5:95, beispielhaft 85:15 bis 15:85 oder 80:20 bis 20:80.

Die Vorstufe der im Rahmen vorliegender Erfindung einzusetzenden alkoxylierten Oligo- und Polyethylenimine sind verzweigte, oligomere oder polymere Amine, in denen auf zwei C-Atome immer ein Stickstoff-Atom folgt. Das Verhältnis von primären zu sekundären zu tertiären Stickstoff-Atomen beträgt vorzugsweise - wie bei den entsprechenden im Handel befindlichen Produkten üblich - etwa 1 : 2 : 1. Als Polymere haben sie eine Molekulargewichtsverteilung. Im Rahmen der vorliegenden Erfindung werden dabei vorzugsweise diejenigen Typen eingesetzt, deren mittlere Molmassen (M_{w} gemessen mittels Lichtstreuung) größer als 55 000 g/mol ist. Folgende Formel verdeutlicht den Aufbau handelsüblicher verzweigter Polyethylenimine, bei denen das Verhältnis von primären zu sekundären zu tertiären Stickstoff-Atomen etwa 1 : 2 : 1 beträgt: 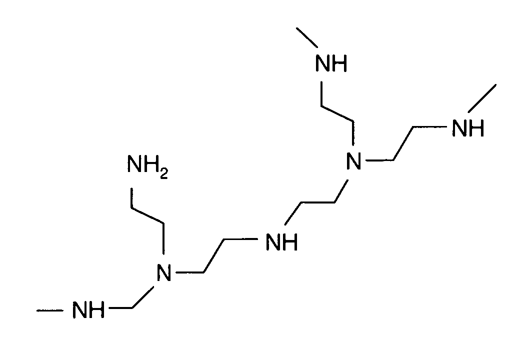 Das Oligo- oder Polyethylenimin wird, wie im Stand der Technik bekannt, mit C₂-C₄-Alkylenoxiden oder einer Mischung solcher Alkylenoxide alkoxyliert, so dass das alkoxylierte Oligo- oder Polyethylenimin einen bevorzugten Alkoxylierungsgrad von 2 bis 80 Alkylenoxideinheiten pro freier NH-Gruppe aufweist. Insbesondere werden die verwendeten alkoxylierten Oligo- oder Polyethylenimine durch sequentielle Alkoxylierung von Ethylenoxid, Propylenoxid und/oder Butylenoxid unter alkalischer Katalyse hergestellt. Dabei sind solche alkoxylierten Oligo- oder Polyethylenimine bevorzugt, die durch Alkoxylierung zuerst mit Propylenoxid (PO) und anschließend mit Ethylenoxid (EO) hergestellt werden. Folgende Strukturformeln verranschaulichen beispielhaft die Struktur eines bevorzugt verwendeten alkoxylierten Oligo- (1) oder Polyethylenimins (2): 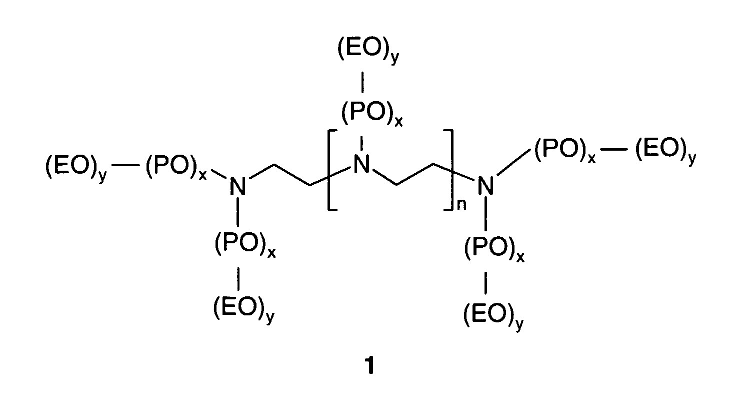 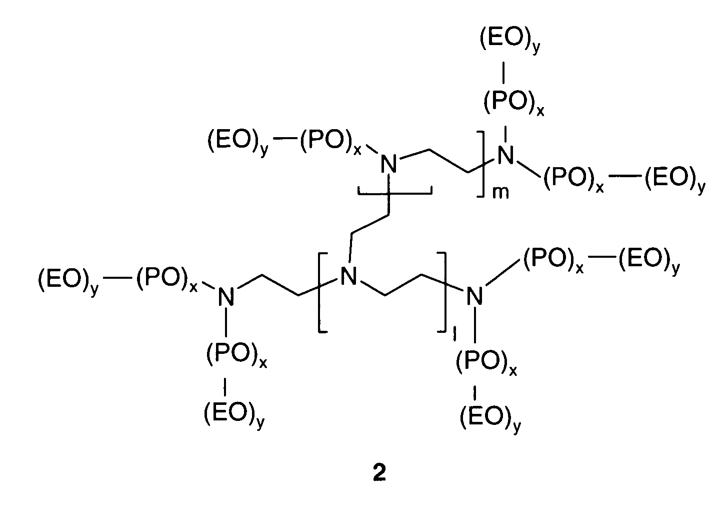 worin I, m und n unabhängig voneinander eine Zahl von 0 bis 100 und (x + y) gleich 1 bis 100 sind.

Die Verbindungen C) haben im Allgemeinen ein Molekulargewicht von mehr als 55 000 g/mol, vorzugsweise von 55.000 bis 1.000.000, insbesondere von 55000 bis 85000 g/mol, gemessen mittels Gelpermeationschromatographie (GPC) gegen Polyethylenglykol in Tetrahydrofuran.

Eine wichtige Bestimmungsgröße für die Polymere C ist ihre Wasserzahl (WZ). Sie wird nach DIN EN 12836 bestimmt. Zu einem Lösemittel-Gemisch, das aus Dioxan und Toluol im Verhältnis 97:3 besteht, und in dem die Probe von C) als klare Lösung vorliegt, wird Wasser bei einer Temperatur von (25 ± 1)°C zugegeben, bis eine bleibende Trübung auftritt. Die Wasserzahl wird angegeben in Millilitern Wasser, die für die Titration benötigt wird, um die bleibende Trübung zu erhalten. Vorzugsweise liegt die Wasserzahl der Verbindungen C) zwischen 6 ml und 25 ml, insbesondere zwischen 6 ml und 17 ml.

Die alkoxylierten Oligo- oder Polyethylenimine C) werden den A) und B) enthaltenden Mischungen in Mengen von 0,001 bis 5 Gew.-%, bevorzugt 0,005 bis 1 Gew.-% und bis 0,05 Gew.-% zugesetzt. Dabei können sie als solche oder auch gelöst bzw. dispergiert in Lösemitteln, wie z.B. aliphatischen und/oder aromatischen Kohlenwasserstoffen oder Kohlenwasserstoffgemischen wie z.B. Toluol, Xylol, Ethylbenzol, Decan, Pentadecan, Benzinfraktionen, Kerosin, Naphtha, Diesel, Heizöl, Isoparaffine oder kommerziellen Lösemittelgemischen wie Solvent Naphtha, ®Shellsol AB, ®Solvesso 150, ®Solvesso 200, ®Exxsol-, ®Isopar- und ®Shellsol D-Typen eingesetzt werden. Bevorzugt sind sie in Brennstofföl tierischen oder pflanzlichen Ursprungs auf Basis von Fettsäurealkylestern gelöst. Bevorzugt enthalten die erfindungsgemäßen Additive 1 - 80 %, speziell 10 - 70 %, insbesondere 25 - 60 % Lösemittel.

Die Polymere C) können dem zu additivierenden Öl gemäß im Stand der Technik bekannten Verfahren zugeführt werden. Wenn mehr als eine Verbindung C) verwendet werden soll, können solche Komponenten zusammen oder separat in beliebiger Kombination in das Öl eingebracht werden.

Zur Herstellung von Additivpaketen für spezielle Problemlösungen können die Polymere C) auch zusammen mit einem oder mehreren öllöslichen Co-Additiven eingesetzt werden, die bereits für sich allein die Eigenschaften von Rohölen, Schmierölen oder Brennölen verbessern. Beispiele solcher Co-Additive sind polare Verbindungen, die eine Paraffindispergierung bewirken (Paraffindispergatoren), Alkylphenol-Aldehydharze, polymere Kaltfließverbesserer sowie öllösliche Amphiphile.

So haben sich Mischungen der Polymere C) mit solchen Copolymeren hervorragend bewährt, die 10 bis 40 Gew.-% Vinylacetat und 60 bis 90 Gew.-% Ethylen enthalten. Nach einer weiteren Ausgestaltung der Erfindung setzt man die erfindungsgemäßen Additive in Mischung mit Ethylen/Vinylacetat/Vinyl-2-ethylhexanoat-Terpolymeren, Ethylen/Vinylacetat/Neononansäurevinylester-Terpolymeren und/oder Ethylen-Vinylacetat/Neodecansäurevinylester-Terpolymeren zur gleichzeitigen Verbesserung der Fließfähigkeit und Schmierwirkung von Mineralölen oder Mineralöldestillaten ein. Die Terpolymere der 2-Ethylhexansäurevinylester, Neononansäurevinylester bzw. der Neodecansäurevinylester enthalten außer Ethylen 8 bis 40 Gew.-% Vinylacetat und 1 bis 40 Gew.-% des jeweiligen langkettigen Vinylesters. Weitere bevorzugte Copolymere enthalten neben Ethylen und 10 bis 40 Gew.-% Vinylestern und/oder 1 bis 40 Gew.-% langkettige Vinylester noch 0,5 bis 20 Gew.-% Olefin mit 3 bis 10 C-Atomen wie z.B. Isobutylen, Diisobutylen, Propylen, Methylpenten oder Norbornen.

Bei den Paraffindispergatoren handelt es sich vorzugsweise um niedermolekulare oder polymere, öllösliche Verbindungen mit ionischen oder polaren Gruppen wie z.B. Aminsalze, Imide und/oder Amide. Besonders bevorzugte Paraffindispergatoren enthalten Umsetzungsprodukte primärer und/oder sekundärer Fettamine mit 8 bis 36 C-Atomen, insbesondere Dicocosfettamin, Ditalgfettamin und Distearylamin. Besonders bewährt haben sich Paraffindispergatoren, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Andere Paraffindispergatoren sind Copolymere des Maleinsäureanhydrids und α,β-ungesättigter Verbindungen, die gegebenenfalls mit primären Monoalkylaminen und/oder aliphatischen Alkoholen umgesetzt werden können (vgl. EP-A-0 154 177), die Umsetzungsprodukte von Alkenylspirobislactonen mit Aminen (vgl. EP-A-0 413 279 B1) und nach EP-A-0 606 055 A2 Umsetzungsprodukte von Terpolymeren auf Basis α,β-ungesättigter Dicarbonsäureanhydride, α,β-ungesättigter Verbindungen und Polyoxylalkylenether niederer ungesättigter Alkohole.

Als Co-Additive, die eine Paraffindispergierung bewirken sind beispielsweise Ester geeignet. Diese Ester leiten sich von Polyolen mit 3 oder mehr OH-Gruppen ab, insbesondere von Glycerin, Trimethylolpropan, Pentaerythrit sowie die daraus durch Kondensation zugänglichen Oligomere mit 2 bis 10 Monomereinheiten wie z.B. Polyglycerin. Die Polyole sind im Allgemeinen mit 1 bis 100 mol Alkylenoxid, bevorzugt 3 bis 70, insbesondere 5 bis 50 mol Alkylenoxid pro mol Polyol umgesetzt. Bevorzugte Alkylenoxide sind Ethylenoxid, Propylenoxid und Butylenoxid. Die Alkoxylierung erfolgt nach bekannten Verfahren.

Die für die Veresterung der alkoxylierten Polyole geeigneten Fettsäuren haben vorzugsweise 8 bis 50, insbesondere 12 bis 30, speziell 16 bis 26 C-Atome. Geeignete Fettsäuren sind beispielsweise Laurin-, Tridecan-, Myristin-, Pentadecan-, Palmitin-, Margarin-, Stearin-, Isostearin-, Arachin- und Behensäure, Öl- und Erucasäure, Palmitolein-, Myristolein, Ricinolsäure, sowie aus natürlichen Fetten und Ölen gewonnene Fettsäuremischungen. Bevorzugte Fettsäuremischungen enthalten mehr als 50 % Fettsäuren mit mindestens 20 C-Atomen. Bevorzugt enthalten weniger als 50 % der zur Veresterung verwendeten Fettsäuren Doppelbindungen, insbesondere weniger als 10 %; speziell sind sie weitestgehend gesättigt. Unter weitestgehend gesättigt soll hier eine lodzahl der verwendeten Fettsäure von bis zu 5 g I pro 100 g Fettsäure verstanden werden. Die Veresterung kann auch ausgehend von reaktiven Derivaten der Fettsäuren wie Estern mit niederen Alkoholen (z.B. Methyl- oder Ethylester) oder Anhydriden erfolgen.

Zur Veresterung der alkoxylierten Polyole können auch Gemische obiger Fettsäuren mit fettlöslichen, mehrwertigen Carbonsäuren eingesetzt werden. Beispiele für geeignete mehrwertige Carbonsäuren sind Dimerfettsäuren, Alkenylbernsteinsäuren und aromatische Polycarbonsäuren sowie deren Derivate wie Anhydride und C₁- bis C₅-Ester. Bevorzugt sind Alkenylbernsteinsäuren und deren Derivate mit Alkylresten mit 8 bis 200, insbesondere 10 bis 50 C-Atomen. Beispiele sind Dodecenyl-, Octadecenyl- und Poly(isobutenyl)bernsteinsäureanhydrid. Bevorzugt werden die mehrwertigen Carbonsäuren dabei zu untergeordneten Anteilen von bis zu 30 Mol-%, bevorzugt 1 bis 20 Mol-%, insbesondere 2 bis 10 Mol-% eingesetzt. Ester und Fettsäure werden für die Veresterung bezogen auf den Gehalt an Hydroxylgruppen einerseits und Carboxylgruppen andererseits im Verhältnis 1,5:1 bis 1:1,5 eingesetzt, bevorzugt 1,1:1 bis 1:1,1, insbesondere equimolar. Die paraffindispergierende Wirkung ist besonders ausgeprägt, wenn mit einem Säureüberschuss von bis zu 20 Mol-%, speziell bis zu 10 Mol-%, insbesondere bis zu
5 Mol-% gearbeitet wird.

Die Veresterung wird nach üblichen Verfahren durchgeführt. Besonders bewährt hat sich die Umsetzung von Polyolalkoxylat mit Fettsäure, gegebenenfalls in Gegenwart von Katalysatoren wie z.B. para-Toluolsulfonsäure, C₂- bis C₅₀-Alkylbenzolsulfonsäuren, Methansulfonsäure oder sauren lonenaustauschern. Die Abtrennung des Reaktionswassers kann destillativ durch Direktkondensation oder bevorzugt mittels azeotroper Destillation in Anwesenheit organischer Lösemittel, insbesondere aromatischer Lösemittel wie Toluol, Xylol oder auch höher siedender Gemische wie ®Shellsol A, Shellsol B, Shellsol AB oder Solvent Naphtha erfolgen. Die Veresterung erfolgt bevorzugt vollständig, d.h. für die Veresterung werden 1,0 bis 1,5 mol Fettsäure pro mol Hydroxylgruppen eingesetzt. Die Säurezahl der Ester liegt im allgemeinen unter 15 mg KOH/g, bevorzugt unter 10 mg KOH/g speziell unter 5 mg KOH/g.

Besonders bevorzugte Paraffindispergatoren werden durch Reaktion von Verbindungen, die eine Acylgruppe enthalten, mit einem Amin hergestellt. Bei diesem Amin handelt es sich um eine Verbindung der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln -(A-O)ₓ-E oder
-(CH₂)ₙ-NYZ bedeuten, worin A für eine Ethylen- oder Propylengruppe steht, x eine Zahl von 1 bis 50, E = H, C₁-C₃₀-Alkyl, C₅-C₁₂-Cycloalkyl oder C₆-C₃₀-Aryl, und n 2, 3 oder 4 bedeuten, und Y und Z unabhängig voneinander H, C₁-C₃₀-Alkyl oder -(A-O)ₓ bedeuten. Unter Acylgruppe wird hier eine funktionelle Gruppe folgender Formel verstanden:

>C=O

Die Paraffindispergatoren können den Polymeren C) beigemischt oder separat dem zu additivierenden Mitteldestillat zugesetzt werden.

Als Paraffindispergatoren sind auch Alkylphenol-Aldehydharze geeignet. Alkylphenol-Aldehyd-Harze sind prinzipiell bekannt und beispielsweise im Römpp Chemie Lexikon, 9. Auflage, Thieme Verlag 1988-92, Band 4, S. 3351ff. beschrieben. Die Alkyl- oder Alkenylreste des Alkylphenols besitzen 6 - 24, bevorzugt 8 - 22, insbesondere 9 - 18 Kohlenstoffatome. Sie können linear oder bevorzugt verzweigt sein, wobei die Verzweigung sekundäre wie auch tertiäre Strukturelemente enthalten kann. Bevorzugt handelt es sich um n- und iso-Hexyl, n-und iso-Octyl, n- und iso-Nonyl, n- und iso-Decyl, n- und iso-Dodecyl, Tetradecyl, Hexadecyl, Octadecyl, Eicosyl sowie Tripropenyl, Tetrapropenyl, Pentapropenyl und Polyisobutenyl bis C₂₄. Das Alkylphenol-Aldehyd-Harz kann auch bis zu 20 Mol-% Phenoleinheiten und/oder Alkylphenole mit kurzen Alkylketten wie z.B. Butylphenol enthalten. Für das Alkylphenol-Aldehydharz können gleiche oder verschiedene Alkylphenole verwendet werden.

Der Aldehyd im Alkylphenol-Aldehyd-Harz besitzt 1 bis 10, bevorzugt 1 bis 4 Kohlenstoffatome und kann weitere funktionelle Gruppen tragen. Bevorzugt ist er ein aliphatischer Aldehyd, besonders bevorzugt ist er Formaldehyd.

Das Molekulargewicht der Alkylphenol-Aldehyd-Harze beträgt vorzugsweise 350 - 10.000, insbesondere 400 - 5000 g/mol. Bevorzugt entspricht dies einem Kondensationsgrad n von 3 bis 40, insbesondere von 4 bis 20. Voraussetzung ist hierbei, dass die Harze öllöslich sind.

In einer bevorzugten Ausführungsform der Erfindung handelt es sich bei diesen Alkylphenol-Formaldehydharzen um solche, die Oligo- oder Polymere mit einer repetitiven Struktureinheit der Formel 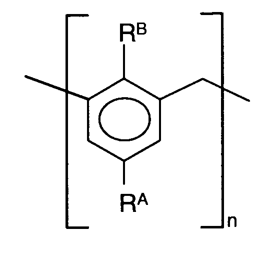 sind, worin R^{A} für C₄ bis C₃₀-, insbesondere C₆- bis C₂₄-Alkyl oder -Alkenyl, R^{B} für OH oder O-(A-O)ₓ-H mit A = C₂-C₄-Alkylen und x = 1 bis 50, und n für eine Zahl von 2 bis 50, insbesondere 5 bis 40 und speziell 7 bis 12 steht.

Die Herstellung der Alkylphenol-Aldehyd-Harze erfolgt in bekannter Weise durch basische Katalyse, wobei Kondensationsprodukte vom Resoltyp entstehen, oder durch saure Katalyse, wobei Kondensationsprodukte vom Novolaktyp entstehen.

Die nach beiden Arten gewonnenen Kondensate sind für die erfindungsgemäßen Zusammensetzungen geeignet. Bevorzugt ist die Kondensation in Gegenwart von sauren Katalysatoren.

Zur Herstellung der Alkylphenol-Aldehyd-Harze werden ein Alkylphenol mit 6 - 24, bevorzugt 8 - 22, insbesondere 9 - 18 C-Atomen je Alkylgruppe, oder Gemische hiervon und mindestens ein Aldehyd miteinander umgesetzt, wobei pro mol Alkylphenolverbindung etwa 0,5 - 2 mol, vorzugsweise 0,7 - 1,3 mol und insbesondere äquimolare Mengen Aldehyd eingesetzt werden.

Geeignete Alkylphenole sind insbesondere n- und iso-Hexylphenol, n- und isoOctylphenol, n- und iso-Nonylphenol, n- und iso-Decylphenol, n- und iso-Dodecylphenol, Tetradecylphenol, Hexadecylphenol, Octadecylphenol, Eicosylphenol, Tripropenylphenol, Tetrapropenylphenol und Poly(isobutenyl)phenol bis C₂₄.

Die Alkylphenole sind vorzugsweise para-substituiert. Die Alkylphenole können einen oder mehrere Alkylreste tragen. Vorzugsweise sind sie zu höchstens 5 Mol-%, insbesondere zu höchstens 20 Mol-% und speziell höchstens 40 Mol-% mit mehr als einer Alkylgruppe substituiert. Bevorzugt tragen höchstens 40 Mol-%, insbesondere höchstens 20 Mol-% der eingesetzten Alkylphenole in ortho-Position einen Alkylrest. Speziell sind die Alkylphenole in ortho-Position zur Hydroxylgruppe nicht mit tertiären Alkylgruppen substituiert.

Der Aldehyd kann ein Mono- oder Dialdehyd sein und weitere funktionelle Gruppen wie -COOH tragen. Besonders geeignete Aldehyde sind Formaldehyd, Acetaldehyd, Butyraldehyd, Glutardialdehyd und Glyoxalsäure, bevorzugt ist Formaldehyd. Der Formaldehyd kann in Form von Paraformaldehyd oder in Form einer vorzugsweise 20 - 40 gew.-%igen wässrigen Formalinlösung eingesetzt werden. Es können auch entsprechende Mengen an Trioxan verwendet werden.

Die Umsetzung von Alkylphenol und Aldehyd erfolgt üblicherweise in Gegenwart von alkalischen Katalysatoren, beispielsweise Alkalihydroxiden oder Alkylaminen, oder von sauren Katalysatoren, beispielsweise anorganischen oder organischen Säuren, wie Salzsäure, Schwefelsäure, Phosphorsäure, Sulfonsäure, Sulfamidosäuren oder Halogenessigsäuren, und in Gegenwart eines mit Wasser ein Azeotrop bildenden organischen Lösungsmittels, beispielsweise Toluol, Xylol, höheren Aromaten oder Gemischen hiervon. Das Reaktionsgemisch wird auf eine Temperatur von 90 bis 200°C, bevorzugt 100 - 160°C erhitzt, wobei das entstehende Reaktionswasser während der Umsetzung durch azeotrope Destillation entfernt wird. Lösungsmittel, die unter den Bedingungen der Kondensation keine Protonen abspalten, können nach der Kondensationsreaktion in den Produkten bleiben. Die Harze können direkt oder nach Neutralisation des Katalysators eingesetzt werden, gegebenenfalls nach weiterer Verdünnung der Lösung mit aliphatischen und/oder aromatischen Kohlenwasserstoffen oder Kohlenwasserstoffgemischen, z.B. Benzinfraktionen, Kerosin, Decan, Pentadecan, Toluol, Xylol, Ethylbenzol oder Lösungsmitteln wie ®Solvent Naphtha, ®Shellsol AB, ®Solvesso 150, ®Solvesso 200, ®Exxsol, ®ISOPAR- und ®Shellsol D-Typen.

Schließlich werden in einer weiteren Ausführungsform der Erfindung die Polymere C) zusammen mit Kammpolymeren verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers-Structure and Properties; N.A. Platé and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 A1), Copolymere aus einem
C₆-C₂₄-α-Olefin und einem N-C₆-C₂₂-Alkylmaleinsäureimid (vgl. EP-A-0 320 766), ferner veresterte Olefin/ Maleinsäureanhydrid-Copolymere, Polymere und Copolymere von α-Olefinen und veresterte Copolymere von Styrol und Maleinsäureanhydrid.
Kammpolymere können beispielsweise durch die Formel 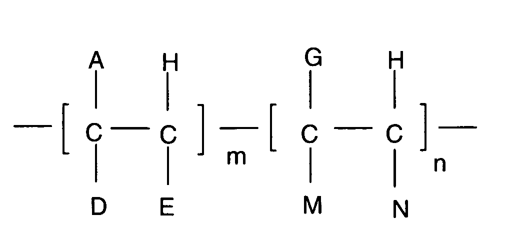 beschrieben werden. Darin bedeuten
- A: R', COOR', OCOR', R"-COOR' oder OR';
- D: H, CH₃, A oder R;
- E: H oder A;
- G: H, R", R"-COOR', einen Arylrest oder einen heterocyclischen Rest;
- M: H, COOR", OCOR", OR" oder COOH;
- N: H, R", COOR", OCOR", COOH oder einen Arylrest;
- R': eine Kohlenwasserstoffkette mit 8-150 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

Das Mischungsverhältnis (in Gewichtsteilen) Polymere C) mit polymeren Kaltfließverbesserern, Paraffindispergatoren, Kammpolymeren bzw. Harzen beträgt jeweils 1 : 1000 bis 1 : 1 , vorzugsweise 1:10 bis 1:50 .

Die Polymere C) können allein oder auch zusammen mit anderen Additiven verwendet werden, z. B. mit anderen Stockpunkterniedrigern oder Entwachsungshilfsmitteln, mit Korrosionsinhibitoren, Antioxidantien, Lubricity-Additiven, Schlamminhibitoren, Dehazern und Zusätzen zur Erniedrigung des Cloud-Points.

### Beispiele

### Charakterisierung der Testöle:

Die Bestimmung des CFPP-Werts erfolgt gemäß EN 116, die der Siedekenndaten gemäß ASTM D-86 und die Bestimmung des Cloud Points gemäß ISO 3015.

**Tabelle 1:**

| Analyse des verwendeten Biodiesel | | | |
|---|---|---|---|
| ÖI Nr. | | CP | CFPP |
| E 1 | Rapsölsäuremethylester (RME) | -2,3 °C | -14°C |
| E 2 | 90% Rapsölsäuremethylester (RME) + 10 % Sojaölsäuremethylester (SojaME) | -2,0°C | -8°C |

**Tabelle 2:**

| C-Kettenverteilung der zur Herstellung der Testöle eingesetzten Fettsäuremethylester (Hauptbestandteile; Fl.-% gemäß GC) | | | | | | | | | | |
|---|---|---|---|---|---|---|---|---|---|---|
| | C₁₆ | C₁₆' | C₁₈ | C₁₈' | C₁₈" | C₁₈'" | C₂₀ | C₂₀' | C₂₂ | Σ gesättigt |
| RME | 4,4 | 0,4 | 1,6 | 57,8 | 21,6 | 8,8 | 1,5 | 0,7 | 0,2 | 7,7 |
| SojaME | 10,4 | 0,1 | 4,1 | 24,8 | 51,3 | 6,9 | 0,5 | 0,4 | 0,4 | 15,4 |
| (C₁₈' bedeutet 1 Doppelbindung, C₁₈" bedeutet 2 Doppelbindungen, usw.) | | | | | | | | | | |

**Tabelle 3:**

| Charakterisierung der verwendeten Mitteldestillate | | | | |
|---|---|---|---|---|
| | F1 | F2 | F3 | F4 |
| Schwefelgehalt, ppm | 7,9 | 4,9 | 32,0 | 900 |
| Dichte, g/cm³ | 0,8436 | 0,8306 | 0,8348 | 0,8487 |
| Siedebeginn, °C | 209,9 | 143,9 | 209,1 | 203,7 |
| Siedeende, °C | 334,6 | 363,2 | 347,8 | 365,6 |
| Siedebereich (90-20), °C | 63,5 | 87,6 | 83,8 | 94,9 |
| Aromatengehalt, Gew.-% | 25,7 | 16,5 | 20,5 | 29,9 |

**Tabelle 4:**

| Charakterisierung der Polymere C | | |
|---|---|---|
| Polymer | M_{w} [g/mol] | Wasserzahl [ml] |
| P1 | 250000 | 7,9 |
| P2 | 500000 | 8,5 |
| P3 | 750 000 | 6,6 |
| P4 | 800 000 | 6,0 |
| P5 | 60000 | 7,1 |
| P6 | 55000 | 9,3 |

**Tabelle 5:**

| Charakterisierung der Fließverbesserer | | | |
|---|---|---|---|
| Polymer | Comonomer(e) | V₁₄₀ | Verzweigungsgrad CH₃/100 CH₂ |
| P7 | 13,6 Mol-% Vinylacetat | 130 mPas | 3,7 |
| P8 | 15.9 Mol-% Vinylacetat und 1,2 Mol-% Neodecansäurevinylester | 105 mPas | 5,5 |
| P9 | 9,4 Mol-% Vinylacetat | 220 mPas | 6,2 |

### Wirksamkeit als Demulgator

Die Prüfung der Emulgierneigung von Additiven erfolgt gemäß ASTM D 1094-85. 80 ml eines Dieselkraftstoffes (hier Mischung aus Mineraldiesel und Biodiesel) werden in einem 100 ml Standzylinder mit 250 ppm des zu testenden Additivs versetzt und 15 Minuten bei 60°C temperiert und dann geschüttelt. Nach Abkühlen auf Raumtemperatur werden 20 ml Pufferlösung (pH = 7) hinzugegeben und 2 Minuten geschüttelt. Nach 5 Minuten wird die Probe optisch nach folgenden Kriterien beurteilt:

| Bewertung der Trennschicht | | Bewertung der Phasentrennung | |
|---|---|---|---|
| 1 | Klar und sauber | 1 | Komplette Abwesenheit aller Emulsionen und/oder Abscheidungen in beiden Phasen oder oben auf der Öl-Phase. |
| 1 b | kleine, klare Blasen, die schätzungsweise nicht mehr als 50 % der Trennschicht bedecken. Keine Schlieren, keine Filmbildung oder sonstige Benetzung an der Trennschicht. | 2 | Wie (1), aber zusätzlich kleine Luftbläschen oder kleine Wassertröpfchen in der Öl-Phase. |
| 2 | Schlieren, Filmbildung oder sonstige Benetzung an der Trennschicht | 3 | Emulsionen und/oder Niederschläge in beiden Phasen oder oben auf der Öl-Phase, und/oder Tropfen in der Wasser-Phase oder an der Wandung anhaftend (ausgenommen die Wandung über der Öl-Phase). In Klammern gesetzt: Menge der Wasserphase |
| 3 | Schmaler Saum oder leichte Schaumbildung, oder beides | | |
| 4 | Dichter Saum oder starke Schaumbildung, oder beides | | |

**Tabelle 6:**

| Wirksamkeit von Copolymeren als Demulgator in einer Mischung aus 95 Gew.-% F2 und 5 Gew.-% Biodiesel E1 | | | | | | | |
|---|---|---|---|---|---|---|---|
| Bsp. Nr. | Polymer | optische Beurteilung | | | | | Dosierung Polymer in ppm |
| | | Trennschicht | Phasentrennung | | Öl-Phase | Wasser-Phase | |
| 1(V) | - | 3-4 | 12 ml | 3 | trübe | klar | - |
| 2(V) | P7 | 4 | 14 ml | 3 | trübe | klar | 250 |
| 3(V) | P8 | 3 | 15 ml | 3 | trübe | klar | 250 |
| 4(V) | P9 | 4 | 17 ml | 3 | trübe | klar | 250 |
| 5 | P1 | 1 | 20 ml | 3 | trübe | klar | 250 |
| 6 | P2 | 1b | 20 ml | 3 | trübe | klar | 250 |
| 7 | P3 | 1 | 20 ml | 3 | trübe | klar | 250 |
| 8 | P4 | 1b | 20 ml | 3 | trübe | klar | 250 |
| 9 | P5 | 1 | 20 ml | 3 | trübe | klar | 250 |
| 10 | P6 | 1 | 20 ml | 3 | trübe | klar | 250 |
| 11 | P1 | 1 | 20 ml | 3 | trübe | klar | 100 |
| 12 | P1 | 1 | 20 ml | 3 | trübe | klar | 50 |
| 13 | P1 | 1 | 20 ml | 3 | trübe | klar | 25 |
| 14 | P1 | 1 b | 20 ml | 3 | trübe | klar | 10 |
| 15 | P3 | 1 | 20 ml | 3 | trübe | klar | 100 |
| 16 | P3 | 1 | 20 ml | 3 | trübe | klar | 50 |
| 17 | P3 | 1 b | 20 ml | 3 | trübe | klar | 25 |
| 18 | P3 | 1 b | 19 ml | 3 | trübe | klar | 10 |
| 19 | P5 | 1 | 20 ml | 3 | trübe | klar | 50 |
| 20 | P5 | 1 | 20 ml | 3 | trübe | klar | 25 |
| * deutliche Phasentrennung bereits nach kurzer Zeit (1 bis 2 Min.) | | | | | | | |

**Tabelle 7:**

| Wirksamkeit von Copolymeren als Demulgator in einer Mischung aus 95 Gew.-% F2 und 5 Gew.-% Biodiesel E2 | | | | | | | |
|---|---|---|---|---|---|---|---|
| Bsp. Nr. | Polymer | optische Beurteilung | | | | | Dosierung Polymer in ppm |
| | | Trennschicht | Phasentrennung | | Öl-Phase | Wasser-Phase | |
| 21(V) | - | 3-4 | 14 ml | 3 | trübe | klar | - |
| 22(V) | P7 | 4 | 13 ml | 3 | trübe | klar | 250 |
| 23(V) | P8 | 3 | 17 ml | 3 | trübe | klar | 250 |
| 24(V) | P9 | 4 | 16 ml | 3 | trübe | klar | 250 |
| 25 | P1 | 1 | 20 ml | 3 | trübe | klar | 250 |
| 26 | P2 | 1 | 20 ml | 3 | trübe | klar | 250 |
| 27 | P3 | 1b | 20 ml | 3 | trübe | klar | 250 |
| 28 | P4 | 1 | 20 ml | 3 | trübe | klar | 250 |
| 29 | P5 | 1 | 20 ml | 3 | trübe | klar | 250 |
| 30 | P6 | 1 b | 20 ml | 3 | trübe | klar | 250 |
| 31 | P1 | 1 | 20 ml | 3 | trübe | klar | 100 |
| 32 | P1 | 1 | 20 ml | 3 | trübe | klar | 50 |
| 33 | P1 | 1 | 20 ml | 3 | trübe | klar | 25 |
| 34 | P1 | 1 | 20 ml | 3 | trübe | klar | 10 |
| 35 | P3 | 1 b | 20 ml | 3 | trübe | klar | 100 |
| 36 | P3 | 1 b | 20 ml | 3 | trübe | klar | 50 |
| 37 | P3 | 1 b | 20 ml | 3 | trübe | klar | 25 |
| 38 | P3 | 1 b | 19 ml | 3 | trübe | klar | 10 |
| 39 | P5 | 1 | 20 ml | 3 | trübe | klar | 50 |
| 40 | P5 | 1 | 20 ml | 3 | trübe | klar | 25 |
| * deutliche Phasentrennung bereits nach kurzer Zeit (1 bis 2 Min.) | | | | | | | |

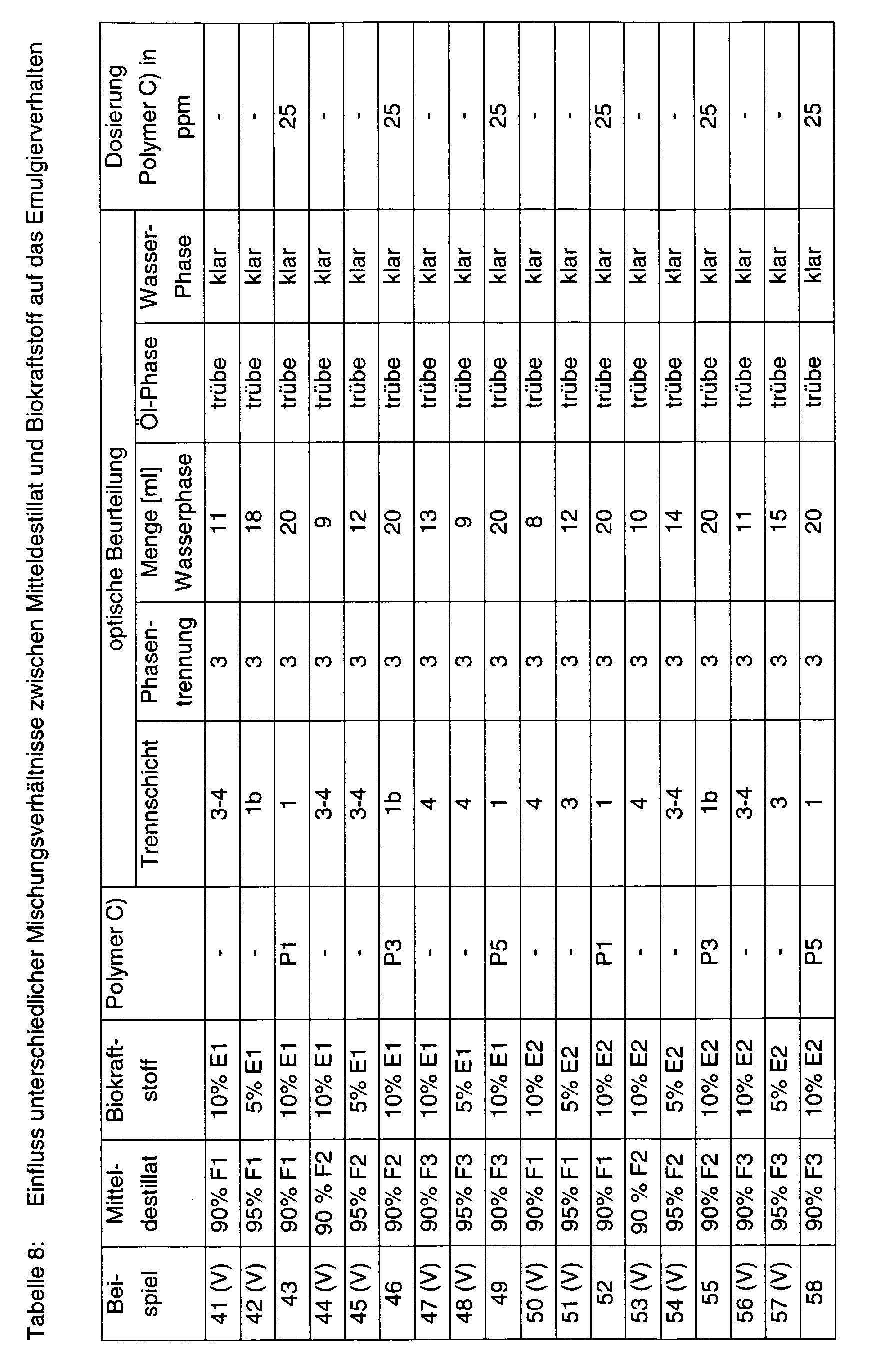

### Einfluss des Oligo- oder Polyethylenimins auf die Wirkung von Kaltfließeigenschaften

Es wurden ein Mitteldestillat (F4) mit einem CFPP von -7°C und dessen Mischung mit 5 % des beschriebenen Biokraftstoffs (CFPP der Mischung ebenfalls -7°C) mit Kaltfließverbesserer und Polyethyleniminen und ein Mitteldestillat (F 2) mit einem CFPP von -12°C und dessen Mischung mit 5% des beschriebenen Biokraftstoffs (CFPP der Mischung ebenfalls -12°C) mit Kaltfließverbesserer und Polyethyleniminen untersucht.

**Tabelle 9:**

| Beeinflussung der Kaltfließeigenschaften durch die Polymere C) | | | | | |
|---|---|---|---|---|---|
| Beispiel | Brennstofföl | 300 ppm P7 | 300 ppm P7 + 25 ppm P 5 | 400 ppm P8 | 400 ppm P8+ 10 ppm P4 |
| 59 (V) | F4 | -16°C | -17°C | -- | -- |
| 60 | F4 + E1 | -17°C | -17°C | -- | -- |
| 61 (V) | F2 | -- | -- | -26°C | -27°C |
| 62 | F2 + E1 | -- | -- | -26°C | -26°C |

Einfluss der Oligo- oder Polyethylenimine auf das Emulgierverhalten der Diesel/Biodiesel-Mischung in Anwesenheit von Fließverbesserern

Das Emulgierverhalten des Öls F4 mit Zusatz von 5 Gew.-% Biokraftstoff E1 bzw. E2 wurde durch die Zugabe von 10 ppm P1 deutlich geändert und zeigte kaum Emulgierneigung trotz Anwesenheit von 300 ppm eines Fließverbesserers.

**Tabelle 10:**

| Einfluss von Kaltfließverbesserern auf die Emulgierneigung mit und ohne Polymer C) | | | | | | | | |
|---|---|---|---|---|---|---|---|---|
| Bsp. | Öl | Kälte-additiv | optische Beurteilung | | | | | Dosierung Polymer C) [ppm] |
| | | | Trennschicht | Phasentrennung | | Öl-Phase | Wasser-Phase | |
| 63 (V) | F4 | P7 | 1b | 20 ml | 3 | trübe | klar | - |
| 64 (V) | F4+E1 | P7 | 3 | 14 ml | 3 | trübe | klar | - |
| 65 | F4+E1 | P7 | 1 | 20 ml | 3 | trübe | klar | 250 ppm P1 |
| 66 | F4+E1 | P7 | 1 | 20 ml | 3 | trübe | klar | 10 ppm P1 |
| 67 | F4+E2 | P7 | 1 | 20 ml | 3 | trübe | klar | 250 ppm P1 |
| 68 | F4+E2 | P7 | 1 | 20 ml | 3 | trübe | klar | 10 ppm P1 |
| 69 | F4+E1 | P7 | 1 | 20 ml | 3 | trübe | klar | 25 ppm P5 |
| 70 | F4+E2 | P7 | 1b | 20 ml | 3 | trübe | klar | 25 ppm P5 |
| 71(V) | F4 | P8 | 1b | 20 ml | 3 | trübe | klar | - |
| 72(V) | F4+E1 | P8 | 3 | 13 ml | 3 | trübe | klar | - |
| 73 | F4+E1 | P8 | 1 | 20 ml | 3 | trübe | klar | 250 ppm P1 |
| 74 | F4+E1 | P8 | 1 | 20 ml | 3 | trübe | klar | 10 ppm P1 |
| 75 | F4+E2 | P8 | 1 | 20 ml | 3 | trübe | klar | 250 ppm P1 |
| 76 | F4+E2 | P8 | 1b | 20 ml | 3 | trübe | klar | 10 ppm P1 |
| 77 | F4+E1 | P8 | 1 | 20 ml | 3 | trübe | klar | 25 ppm P5 |
| 78 | F4+E2 | P8 | 1 | 20 ml | 3 | trübe | klar | 25 ppm P5 |

## Patentansprüche

**1.** Brennstofföl, enthaltend einen größeren Anteil einer Mischung aus
A) einem Mitteldestillat-Brennstofföl, und
B) einem Biobrennstofföl,
sowie einem kleineren Anteil
C) öllöslicher Oligo- oder Polyethylenimine, die mit 1 bis 100 C₂-C₄-Alkylenoxidgruppen oder einer Mischung solcher Alkylenoxidgruppen pro freier NH-Gruppe alkoxyliert sind.

**2.** Brennstofföl nach Anspruch 1, worin das Mischungsverhältnis A) : B) bei 99:1 bis 1:99 liegt.

**3.** Brennstofföl nach Anspruch 1 und/oder 2, worin das Molekulargewicht der alkoxylierten Oligo- oder Polyethylenimine C) zwischen 55.000 und 1.000.000 g/mol liegt.

**4.** Brennstofföl nach einem oder mehreren der Ansprüche 1 bis 3, worin die alkoxylierten Oligo- oder Polyethylenimine C) eine Wasserzahl von 6 bis 25 ml aufweisen.

**5.** Brennstofföl nach einem oder mehreren der Ansprüche 1 bis 4, worin die alkoxylierten Oligo- oder Polyethylenimine C) einen Alkoxylierungsgrad von 2 bis 80 Alkylenoxideinheiten pro freier NH-Gruppe aufweisen.

**6.** Brennstofföl nach einem oder mehreren der Ansprüche 1 bis 5, worin die verwendeten alkoxylierten Oligo- oder Polyethylenimine C) den Formeln 1 und 2 entsprechen 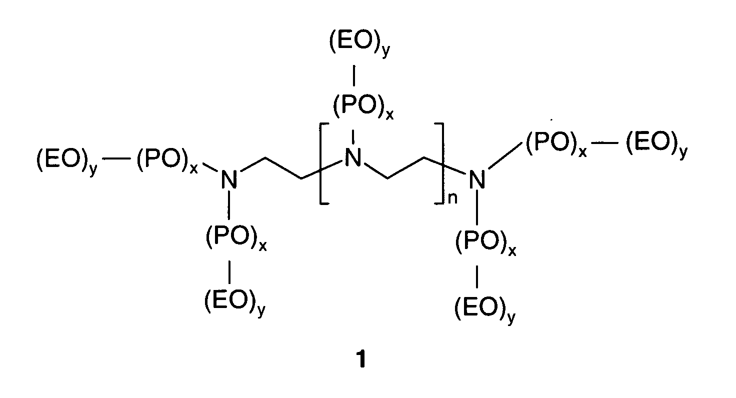 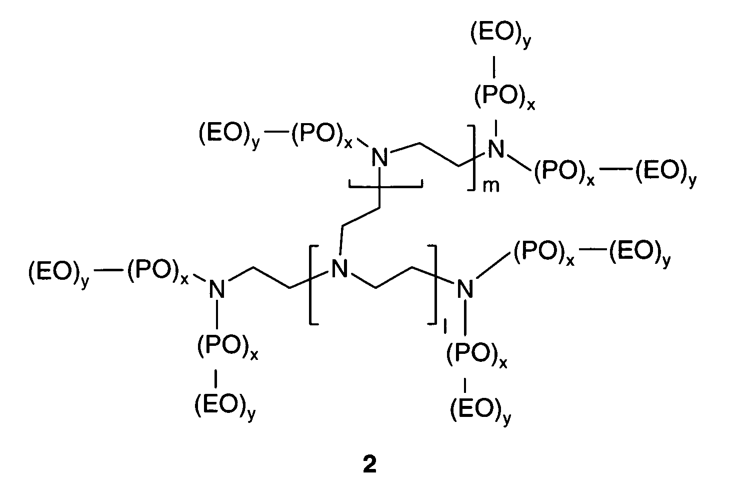 worin I, m und n unabhängig voneinander eine Zahl von 0 bis 100 und (x + y) gleich 1 bis 100 sind.

**7.** Brennstofföl nach einem oder mehreren der Ansprüche 1 bis 6, worin der Gehalt der aus A) und B) bestehenden Mischung an C) von 0,001 bis 5 Gew.-% beträgt.

**8.** Brennstofföle nach einem oder mehreren der Ansprüche 1 bis 7, welche zusätzlich zu den Bestandteilen A), B) und C) noch mindestens ein Alkylphenol-Formaldehydharz der Formel 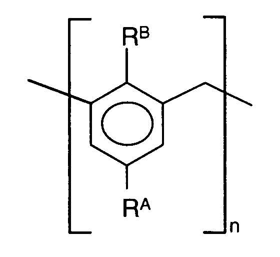 enthalten, worin R^{A} für C₄-C₃₀-Alkyl oder -Alkenyl, R^{B} für OH oder O-(A-O)ₓ-H mit A = C₂-C₄-Alkylen und x = 1 bis 50, und n für eine Zahl von 2 bis 50 steht.

**9.** Brennstofföle nach einem oder mehreren der Ansprüche 1 bis 8, welche mindestens ein Copolymer enthalten, welches 60 bis 90 Gew.- Ethylen, 10 bis 40 Gew.-% Vinylacetat und/oder 1 bis 40 Gew.-% eines langkettigen Vinylesters und/oder 0,5 bis 20 Gew.-% eines Olefins enthalten.

**10.** Brennstofföle nach einem oder mehreren der Ansprüche 1 bis 9, welche mindestens ein Aminsalz, Imid oder Amid eines primären und/oder sekundären Fettamins mit 8 bis 36 Kohlenstoffatomen umfassen.

**11.** Brennstofföle nach einem oder mehreren der Ansprüche 1 bis 10, welche mindestens ein Copolymer enthalten, welche von Amiden, Imiden und/oder Estern der Maleinsäure, Fumarsäure und/oder Itaconsäure abgeleitet sind.

**12.** Brennstofföle nach einem oder mehreren der Ansprüche 1 bis 11, welche ein Kammpolymer der Formel 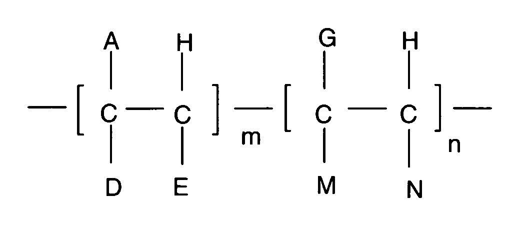 enthalten, worin
A R', COOR', OCOR', R"-COOR' oder OR';
D H, CH₃, A oder R;
E H oder A;
G H, R", R"-COOR', einen Arylrest oder einen heterocyclischen Rest;
M H, COOR", OCOR", OR" oder COOH;
N H, R", COOR", OCOR", COOH oder einen Arylrest;
R' eine Kohlenwasserstoffkette mit 8-150 Kohlenstoffatomen;
R" eine Kohlenwasserstoffkette mit 1 bis 10 Kohlenstoffatomen;
m eine Zahl zwischen 0,4 und 1,0; und
n eine Zahl zwischen 0 und 0,6 bedeuten.

**11.** Verwendung eines Oligo- oder Polyethylenimins wie in Anspruch 1 definiert zur Demulgierung von Mischungen aus Mitteldestillat-Brennstoffölen, Biobrennstoffölen und Wasser.
